# EUROPÄISCHE PATENTSCHRIFT

(11) **EP 0 559 051 B1**
(45) Veröffentlichungstag und Bekanntmachung des Hinweises auf die Patenterteilung: **10.02.1999**
(21) Anmeldenummer: 93102799.9
(22) Anmeldetag: 23.02.1993
(51) Int. Cl.: A62D 3/00

(54) **Recycling von asbesthaltigen Acetylen-Gasflaschen**
Recycling of acetylen gas cylinders containing asbestos
Recyclage des bouteilles à gaz d'acétylène contenant de l'amiante

(30) Priorität: 03.03.1992 DE 4206647
(43) Veröffentlichungstag der Anmeldung: 08.09.1993
(73) Patentinhaber: Legat, Werner, Dr., 30853 Langenhagen (DE)
(72) Erfinder: Swidersky, Hans-Walter, W-3000 Hannover 1 (DE); Legat, Werner, 30853 Langenhagen (DE)

(56) Entgegenhaltungen:
- EP-A- 0 056 645
- EP-A- 0 372 084
- US-A- 3 708 014
- DATABASE WPI Week 7029, 17. Juni 1965 Derwent Publications Ltd., London, GB; AN 70-51837R

## Beschreibung

Die Erfindung bezieht sich auf ein Verfahren zum Überführen von Acetylen-Gasflaschen in recyclefähiges Material.

Acetylen wird als Zwischenprodukt in der chemischen Synthese und als Brenngas für Schweißbrenner verwendet. Der sicheren Handhabung wegen wird Acetylen in speziellen Acetylen-Gasflaschen gelagert und transportiert. Der Innenraum einer Acetylen-Gasflasche ist mit einer festen porösen Masse ausgefüllt. Diese Massen sind asbesthaltig. Heutzutage gebräuchliche poröse Massen bestehen im wesentlichen aus Calciumsilikaten und Asbest. Ausgangsstoffe für diese porösen Massen sind Calciumoxid, Siliciumdioxid, Asbest, Wasser und gegebenenfalls Zuschlagstoffe. Diese Ausgangsstoffe werden zu einem Brei verrührt, in die Gasflasche eingefüllt und bei einer Temperatur von ca. 200 °C miteinander umgesetzt. Anschließend werden die Massen bei 350 bis 400 °C getrocknet. Die porösen Massen weisen ein Porenvolumen von mehr als 90 % auf. Als Lösungsmittel für das aufzupressende Acetylen dient Aceton. In eine 40-Liter-Gasflasche können 12,5 kg Aceton und 8,0 kg Acetylen eingefüllt werden, bei 20 °C herrscht ein Gesamtdruck von 19 bar. Die Gasflaschen sind zwar prinzipiell wieder befüllbar, müssen aber auf Sicherheitsgründen irgendwann aus dem Verkehr gezogen werden. Bislang konnten solche Flaschen nicht umweltgerecht verschrottet werden: Aufgrund des Asbestgehaltes der porösen Trägermatrix dürfen solche Flaschen nicht zersägt oder mit dem Schneidbrenner zerlegt werden, zumal explosive Restmengen an Aceton und Acetylen in den Flaschen enthalten sind.

Das Patent US-A 3,708,014 offenbart ein Verfahren zum Zersetzen von Asbestfasern in Bohrlöchern, beispielsweise in Ölbohrlöchern. Der Asbest soll u. a. die Viskosität von Bohrschlämmen kontrollieren und die Poren des Brunnens abdichten. Die Zersetzung der Fasern erfolgt mit einem Gemisch von HCl und HF. In den Beispielen wird eine Säurelösung mit 0,5 bis 2,1 Gew.-% HF eingesetzt.

Aufgabe der vorliegenden Erfindung ist es, ein umweltgerechtes Verfahren von asbesthaltigen Acetylen-Gasflaschen anzugeben. Diese Aufgabe wird durch das erfindungsgemäße Verfahren gelöst.

Das erfindungsgemäße Verfahren zur Überführung von asbesthaltige Speichermassen aufweisenden Acetylen-Gasflaschen in recyclefähiges Material sieht vor, daß man die asbesthaltigen Speichermassen in der Acetylen-Gasflasche mit Flußsäure, Hexafluorokieselsäure und/oder Tetrafluoroborsäure als Zersetzungsmittel zersetzt, wobei das Zersetzungsmittel in Form einer wäßrigen Lösung mit einer Konzentration von 5 bis 40 Gew.-% Zersetzungsmittel-Gehalt verwendet wird, und man den zersetzten Rückstand aus der Acetylen-Gasflasche entfernt.

Die Zersetzung kann exotherm sein und zu einer Ausdehnung der in der Gasflasche vorhandenen Luft oder Gasatmosphäre führen, oder es können Reaktionsgase entstehen. Die daraus und aus der Luftverdrängung durch das Zersetzungsmittel resultierende Abluft wird zweckmäßig über einen Partikelfilter geleitet, um mitgerissene Feststoffe, z.B. asbesthaltige Partikel der Trägermatrix, abzuscheiden. Die Abluft kann ferner durch einen Gaswäscher geleitet werden, in welchem wasserlösliche Abluftbestandteile, z.B. mitgerissene Flußsäure, ausgewaschen werden können. Zur Abtrennung organischer Bestandteile, die in der Abluft enthalten sein könnten, kann man die Abluft über geeignete Absorptionsfilter, z.B. Aktivkohle führen. Alternativ kann man auch eine katalytische oder nichtkatalytische Nachverbrennung der Abluft vorsehen.

Zur Entfernung organischer Bestandteile, insbesondere Acetylen und Aceton, aus der Acetylen-Gasflasche kann man diese vor der Durchführung des erfindungsgemäßen Verfahrens nach Abschrauben des Bombenverschlußventils Längere Zeit stehen lassen. Flüchtige organische Bestandteile verdampfen dann allmählich. Vorteilhaft pumpt man flüchtige organische Bestandteile unter Anlegen eines Vakuums ab. Die abgepumpten organischen Bestandteile können dann z.B. durch katalytische oder nicht katalytische Nachverbrennung entsorgt werden. Anstelle oder zusätzlich zu einer Vakuumbehandlung kann man die organischen Bestandteile in der Acetylen-Gasflasche in weniger flüchtige oder weniger brennbare Stoffe überführen, z.B. durch Zugabe eines Oxidationsmittels, z.B. wäßriger Wasserstoffperoxid-Lösung, oder Zugabe eines die Polymerisation von Acetylen bzw. Aceton auslösenden Mittels, wie z.B. Übergangsmetallhalogenide.

Man kann zwar das Zersetzungsmittel in wasserfreier Form in die Acetylen-Gasflasche eingeben und Wasser und gegebenenfalls eine Säure zufügen. Vorzugsweise setzt man jedoch eine wäßrige Lösung des Zersetzungsmittels ein. Die Konzentration des Zersetzungsmittels in der wäßrigen Lösung muß so hoch sein, daß die Reaktion anspringt. Man setzt deshalb eine wäßrige Lösung an, die mindestens 5 Gew.-% des Zersetzungsmittels enthält.

Besonders gut geeignet ist Flußsäure als Zersetzungsmittel.

Die Zersetzung in der Acetylen-Gasflasche wird vorzugsweise bei Temperaturen zwischen Umgebungstemperatur und 85 °C durchgeführt. Gewünschtenfalls kann man die Reaktion durch Zuführung externer Wärmeenergie noch erhöhen, bei Anwendung von Hexafluorokieselsäure, Tetrafluoroborsäure, insbesondere Flußsäure wird jedoch eine exotherme Reaktion beobachtet, und die Zuführung externer Wärmeenergie ist hier nicht notwendig. Gegebenenfalls kühlt man die Gasflasche.

Zur Durchführung des Verfahrens entfernt man das Bombenverschlußventil und leitet durch die entstehende Öffnung das Zersetzungsmittel ein. Der Zersetzungsrückstand kann während oder nach der Verfahrensdurchführung aus der Gasflasche entfernt werden, z.B. durch Absaugen oder Auslaufenlassen.

Zweckmäßig dichtet man die durch das Ausschrauben des Bombenverschlußventils entstehende Öffnung gegen die Umgebung ab und führt das Zersetzungsmittel durch eine spezielle Zuleitung zu und leitet etwaig entstehende Abluft oder Abgas durch eine Ableitung ab.

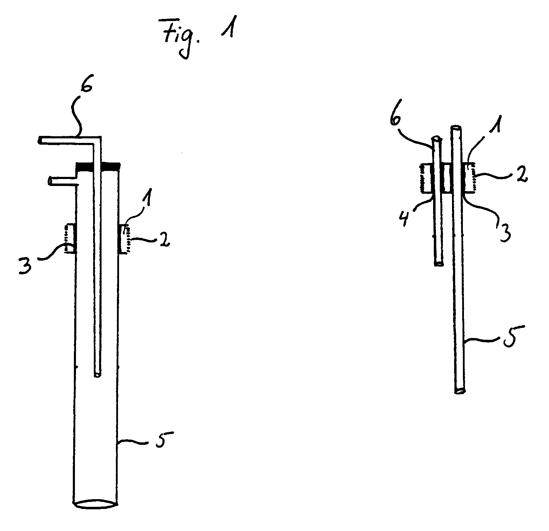

Gemäß einer bevorzugten Ausführungsform verwendet man eine zur Durchführung des Zersetzungsmittels und Ableitung etwaig entstehende Abluft speziell angepaßte Vorrichtung. In Figur 1 sind zwei Ausführungsformen einer solchen speziell angepaßten Vorrichtung wiedergegeben. Die Vorrichtung umfaßt einen Dichtungskörper 1, der ein Gewinde 2 aufweist, das mit dem für die Aufnahme des Bombenverschlußventils vorgesehene Gewinde der Acetylen-Gasflasche kompatibel ist (in Deutschland: Linksgewinde, Steigung 14 Gänge pro Zoll, Durchmesser oben: 31,3 mm, Konus 3:25). Der Dichtungskörper ermöglicht über eine oder mehrere Öffnungen 3, 4 die Zuleitung des Zersetzungsmittels und den Druckausgleich bzw. die Ableitung von Abluft. Vorteilhaft ist die Zuleitung 5 als Rohr ausgebildet, das längs der Hochachse der Gasflasche gegen den Dichtungskörper beweglich angeordnet ist und vorteilhaft eine Länge aufweist, welche die Absenkung bis zum Innenboden der Acetylen-Gasflasche ermöglicht. Die Ableitung 6 kann als kürzeres Rohr, das bis in den Innenraum der Gasflasche ragen kann, ausgebildet sein. Zuführungsleitung und Abführungsleitung können durch nicht eingezeichnete Dichtmittel gegeneinander bzw. gegen den Dichtkörper gedichtet sein. Der Dichtungskörper weist Mittel auf, mit deren Hilfe er in das Gewinde der Gasflasche eingeschraubt werden kann. Bei Anwendung einer derartigen Vorrichtung gestaltet sich das erfindungsgemäße Verfahren besonders einfach.

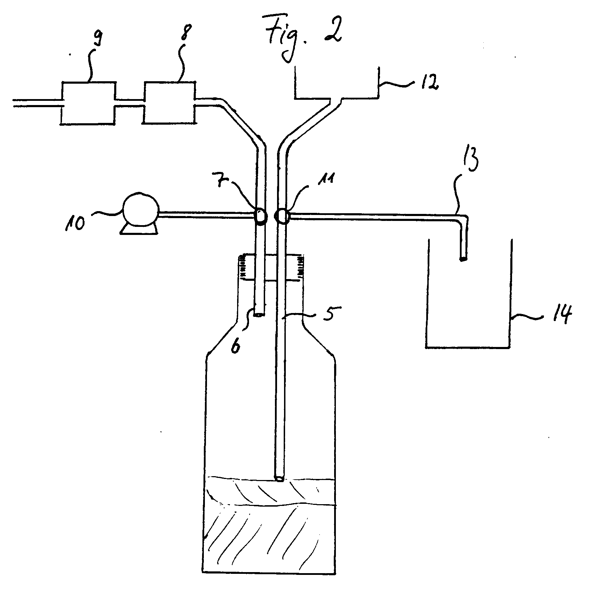

Das Verfahren wird anhand der Verwendung einer solchen Vorrichtung weiter beschrieben. Gereinigt wurde eine 40-l-Acetylenflasche mit 10 kg Trägermatrix. Zunächst entspannte man die Acetylen-Gasflasche. Entweichende Gase können nachverbrannt werden. Gewünschtenfalls kann man durch Anlegen eines Vakuums flüchtige Bestandteile abtrennen. Man kann flüchtige Bestandteile bei abgeschraubtem Bombenverschlußventil (in Deutschland: DIN-Nr. 477 Form C) auch ausgasen lassen. Anschließend wird eine vorstehend beschriebene Vorrichtung auf die Gasflasche aufgeschraubt. Wie in Figur 2 beschrieben ist die Abluftleitung 4 über einen Dreiwegehahn 7 mit einem Partikelfilter 8 und einem Abgaswäscher 9 sowie einer Druckluftquelle 10 verbunden. Die Zuführungsleitung 5 ist über einen Dreiwegehahn 11 mit einem Reservoir 12 für das Zersetzungsmittel und über die Leitung 13 mit einer Vorlage für den zersetzten Rückstand verbunden. Die Abluftleitung wird auf Durchgang zu dem Partikelfilter 8 und den Gaswäschern 9 geschaltet, der Dreiwegehahn auf Durchgang zum Reservoir. Über eine nicht eingezeichnete Dosierungseinrichtung wurde langsam 20-%ige Flußsäure durch das Zuleitungsrohr 5, das auf der porösen Matrix aufliegt, in die Gasflasche eingeleitet. Es bildete sich allmählich eine Suspension aus zersetztem Rückstand. Das Zuleitungsrohr wurde langsam abgesenkt. Pro Kilogramm Trägermasse wurden 1,1 kg HF in Form der 20 Gew.-% HF enthaltenden Flußsäure zugegeben. Nach vollständiger Zersetzung der porösen Matrix wird der Dreiwegehahn 11 auf Durchgang zur Leitung 13 geschaltet, der Dreiwegehahn 7 auf Durchgang zur Druckgasquelle und durch Anlegen eines Überdrucks wird die Suspension des zersetzten Rückstandes durch die Leitung 5 und die Leitung 13 in die Vorlage 14 gepumpt. Gewünschtenfalls kann die Gasflasche noch mit Wasser gespült werden und das Waschwasser ebenfalls über die Leitung 13 in die Vorlage 14 gepumpt werden. In der Vorlage 14 kann der zersetzte Rückstand gegebenenfalls noch ausreagieren und dann mit Kalkmilch neutralisiert werden. Die nunmehr asbestfreie Acetylen-Gasflasche kann ebenfalls mit Kalkmilch neutralisiert, getrocknet und dann einer sicherheitstechnischen Überprüfung unterzogen werden. Je nach Ausgang dieser Überprüfung eignet sie sich zur Wiederverwendung oder sie kann gefahrlos verschrottet werden.

Die Materialien, die mit dem Zersetzungsmittel in Berührung kommen, sind zweckmäßig aus fluorwasserstoffresistentem Material, beispielsweise aus Polytetrafluorethylen oder aus geeigneten Metallegierungen.

## Patentansprüche

1. Verfahren zur Überführung von asbesthaltige Speichermassen aufweisenden Acetylen-Gasflaschen in recyclefähiges Material, wobei man die asbesthaltigen Speichermassen in der Acetylen-Gasflasche mit Flußsäure, Hexafluorokieselsäure und/oder Tetrafluoroborsäure als Zersetzungsmittel zersetzt, wobei das Zersetzungsmittel in Form einer wäßrigen Lösung mit einer Konzentration von 5 bis 40 Gew.-% Zersetzungsmittel-Gehalt verwendet wird, und man den zersetzten Rückstand aus der Acetylen-Gasflasche entfernt.

2. Verfahren nach Anspruch 1, dadurch gekennzeichnet, daß entstehende Abluft über einen Partikelfilter und/oder über einen Gaswäscher geführt wird.

3. Verfahren nach Anspruch 1 oder 2, dadurch gekennzeichnet, daß entstehende Abluft über einen Aktiv-Kohlefilter geführt wird.

4. Verfahren nach Anspruch 1, dadurch gekennzeichnet, daß vor der Einleitung des Zersetzungsmittels in die Acetylen-Gasflasche flüchtige Bestandteile aus der Acetylen-Gasflasche entfernt werden.

5. Verfahren nach Anspruch 1, dadurch gekennzeichnet, daß vor der Einleitung des Zersetzungsmittels organische Rückstände in der Acetylen-Gasflasche in nichtflüchtige Produkte überführt werden.

6. Verfahren nach Anspruch 1, dadurch gekennzeichnet, daß man das Zersetzungsmittel über eine vertikal bewegliche Zuleitung in die Acetylen-Gasflasche einbringt, etwaige Abluft über eine Ableitung aus der Acetylen-Gasflasche ableitet und nach beendeter Zersetzung durch Anlegen eines Druckes auf die Ableitung das, gegebenenfalls in fließfähige Form überführte Zersetzungsprodukt über ein parallel zur Hochachse der Gasflasche bewegliches, abgesenktes, mit der Zuleitung verbundenes Rohr aus der Acetylen-Gasflasche pumpt.

## Claims

1. A method for treating asbestos waste from acetylen gas cylinders comprising an asbestos containing storage mass, wherein the asbestos containing storage mass reacts with hydrofluoric acid, silicofluoric acid and/or fluoroboric acid, wherein the treatment agent is used as a liquid solution comprising 5 to 40 % by weight of the reaction agent, and wherein the residue is removed from the acetylen gas cylinders.

2. The method of claim 1 wherein the evolving exhaust gas is led through a particle filter and /or through a gas scrubber.

3. The method of claim 1 and 2 wherein the evolving exhaust gas is led through a carcoal filter.

4. The method of claim 1 wherein volatile components are removed from the acetylen gas cylinder before the injection of the treatment agent into the acetylen gas cylinder.

5. The method of claim 1 wherein organic residues in the acetylen gas cylinder are transferred in non-volatile products before injection of the treatmant agent.

6. The method of claim 1 wherein the treatment agent is injected into the acetylen gas cylinder through a vertically movable pipe, wherein possible exhaust gas is led by a pipe outside of the acetylen gas cylinder and where after finished treatment the residue, in case transferred in a fluent form, is pumped out of the acetylen gas cylinder by application of pressure to the outlet pipe through a sinked pipe, connected with the input pipe and movable parallel to the high axis of the gas cylinder.

## Revendications

1. Procédé visant à transformer des matériaux de stockage à base d'amiante provenant de bouteilles de gaz d'acétylène en un matériau recyclable par décomposition du matériau de stockage à base d'amiante à l'aide d'acide fluorhydrique, d'acide fluorosilicique et /ou d'acide fluoroborique et pour laquelle l'agent décomposant est utilisé sous forme de solution aqueuse en une concentration de 5 à 40 % en poids de la teneur de décomposant et où le résidu décomposé est éliminé de la bouteille d'acétylène.

2. Procédé selon la revendication 1 se caractérisant par le fait que l'effluent gazeux est passé sur un filtre à particules et/ou un laveur de gaz.

3. Procédé selon la revendication 1 ou 2 se caractérisant par le fait que l'effluent gazeux est passé sur un filtre à charbon actif.

4. Procédé selon la revendication 1 se caractérisant par le fait qu'avant introduction de l'agent de décomposition dans la bouteille de gaz d'acétylène, on procède à l'élimination des composants volatils.

5. Procédé selon la revendication 1 se caractérisant par le fait qu'avant introduction de l'agent de décomposition, les résidus organiques présents dans la bouteille d'acétylène sont transformés en produits non volatils.

6. Procédé selon la revendication 1 se caractérisant par le fait que l'agent de décomposition est injecté par un tube vertical mobile dans la bouteille d'acétylène et que l'effluent gazeux éventuel est évacué par un tube d'adduction et qu'après achèvement de la décomposition, le produit décomposé présent éventuellement sous forme fluide est pompé, par mise sous pression du tube d'évacuation adducteur, par le biais d'un tube immergé mobile fixé parallèlement à l'axe vertical de la bouteille d'acétylène sur le tube d'injection.
